# EUROPEAN PATENT APPLICATION

(11) **EP 2 708 770 A1**
(43) Date of publication of application: **19.03.2014**
(21) Application number: 12781993.6
(22) Date of filing: 02.05.2012
(51) Int. Cl.: F16D 65/14, B60T 13/74, F16D 55/16, F16D 65/18, F16D 65/66

(54) **DISK BRAKE DEVICE**

(30) Priority: 12.05.2011 JP 2011107678
(71) Applicant: TBK Co., Ltd., Machida-shi, Tokyo 194-0045 (JP)
(72) Inventor: YASUDA, Yoshihiro, Machida-shi Tokyo 194-0045 (JP); OHSAWA, Makoto, Machida-shi Tokyo 194-0045 (JP)
(74) Representative: Eveleens Maarse, Pieter
(86) International application number: PCT/JP2012/002970
(87) International publication number: WO 2012/153502

(57) **Abstract**

A disk brake device has a rotor (4) having a braking surface (4a), a caliper, an outer pad and an inner pad (43) each disposed to face the braking surface (4a), and a braking operation mechanism which is caused to perform an operation of pressing the two pads against the braking surface (4a). The braking operation mechanism includes a base plate (35), a wedge plate (37) which holds the inner pad (43), a first movement conversion mechanism which moves the wedge plate (37) in a direction perpendicular to the braking surface (4a), while moving the wedge plate (37) to slide relative to the base plate (35) in a rotating direction of the rotor (4) in parallel to the braking surface (4a), an electric motor unit (24) which outputs a rotational driving force, and a second movement conversion mechanism which moves, using the rotational driving force of the electric motor unit (24), the wedge plate (37) to slide in the rotating direction of the rotor (4) in parallel to the braking surface (4a).

## Description

### TECHNICAL FIELD

The present invention relates to a disk brake device used in a vehicle or the like to generate a braking force using friction and, more particularly, to a disk brake device configured using an electric motor as a drive source for generating the braking force.

### TECHNICAL BACKGROUND

A disk brake device is used widely in a vehicle or the like and configured to press a pad against a rotor which rotates together with a wheel in response to a stepping operation performed on a brake pedal to generate a frictional force and thus brake the rotation of the rotor. Conventionally well known disk brake devices include a type which actuates a piston using a hydraulic force to press a pad against a rotor and a type which actuates a lever using compressed air instead of a hydraulic force.

For example, in a disk brake device which actuates a piston using a hydraulic force, units such as a booster which amplifies an operational force applied to a brake pedal and a master cylinder which converts the operational force amplified by the booster to a hydraulic pressure are needed to easily complicate a device configuration. In view of this, there has been recently developed a disk brake device of a type which drives an electric motor to rotate in response to an operation performed on a brake pedal and presses a pad against a rotor using the resulting rotational driving force to generate a braking force (see, e.g., Patent Document 1). Using such a configuration as disclosed in Patent Document 1 is advantageous in that, by omitting a booster, a master cylinder, and the like, a simple disk brake device can be configured.

### PRIOR ARTS LIST

### PATENT DOCUMENT

Patent Document 1: Japanese Laid-Open Patent Publication No. 2008-516169 (A) based on PCT International Application No. PCT/EP2005/010448

### SUMMARY OF THE INVENTION

### PROBLEMS TO BE SOLVED BY THE INVENTION

In the disk brake device configured using the electric motor, a movement conversion mechanism for converting the rotational driving force of the electric motor to the pressing force with which the pad is pressed against the rotor is needed. However, the problem is encountered that, if the pad is to be pressed against the rotor using a sufficiently large pressing force, the movement conversion mechanism tends to be larger in size and a placement space in which other devices are placed around the disk brake device is reduced accordingly.

The present invention has been achieved in view of problems as described above and an object of the present invention is to provide a disk brake device which has a configuration using an electric motor, but is also compact and capable of generating a sufficient braking force.

### MEANS TO SOLVE THE PROBLEMS

To attain the object described above, a disk brake device according to the present invention includes: a rotor having a disk-shaped braking surface and coupled to a rotating body to be braked to rotate; a caliper (e.g., caliper assembly 10 in an embodiment) disposed to be fixed relative to the rotor in a rotating direction thereof; a frictional pad (e.g., outer pad 41 or inner pad 43 in the embodiment) disposed to face the braking surface of the rotor; and a braking operation mechanism attached to the caliper to be caused to perform an operation of pressing the frictional pad against the braking surface. The braking operation mechanism includes a base member (e.g., base plate 35 in the embodiment) attached to the caliper, a slide member (e.g., wedge plate 37 in the embodiment) disposed to face the base member and holding the frictional pad, a first movement conversion mechanism provided between the base member and the slide member to move the slide member in a direction perpendicular to the braking surface, while moving the slide member to slide relative to the base member in the rotating direction of the rotor in parallel to the braking surface, an electric motor unit attached to the base member to receive electric power and output a rotational driving force, and a second movement conversion mechanism which moves, using the rotational driving force of the electric motor unit, the slide member to slide in the rotating direction of the rotor in parallel to the braking surface. The disk brake device is configured to move, using the rotational driving force of the electric motor unit, the slide member to slide by means of the second movement conversion mechanism as described above and thus move the slide member and the frictional pad held thereby in the direction perpendicular to the braking surface by means of the first movement conversion mechanism to thereby press the frictional pad against the braking surface and brake the rotation of the rotor.

It is preferable that the disk brake device described above further includes: braking operation means (e.g., brake pedal 92 in the embodiment) which is caused to perform a braking operation; required braking force value detection means (e.g., stepping force detection sensor 92a in the embodiment) for detecting a required braking force value presented by the braking operation performed by the braking operation means; braking force detection means (e.g., sensor 31 in the embodiment) for detecting a braking force generated by pressing the frictional pad against the braking surface; and a motor drive control unit (e.g., controller 91 in the embodiment) which controls rotational driving of the electric motor unit, and the motor drive control unit controls the rotational driving of the electric motor unit such that the braking force detected by the braking force detection means has a value corresponding to the required braking force value detected by the required braking force value detection means.

It is preferable that the disk brake device described above further includes rotating direction detection means (e.g., rotating direction detection sensor 93 in the embodiment) for detecting the rotating direction of the rotor, and the motor drive control unit controls a direction of the rotational driving of the electric motor unit such that the frictional pad is pressed against the braking surface, while being moved to slide in the rotating direction of the rotor by the first movement conversion mechanism.

It is preferable that the first movement conversion mechanism includes: a plurality of pairs of V-shaped wedge grooves formed in respective surfaces of the base member and the slide member which extend in parallel to the braking surface and face each other, the wedge grooves extending in directions each at right angles to the rotating direction of the rotor and facing each other; a plurality of rollers disposed in and held between the plurality of pairs of wedge grooves in the base member and the slide member that face each other; a roller holding member (e.g., cage 45 in the embodiment) which restricts movement of the plurality of rollers in axial directions thereof and movement of the plurality of rollers relative to each other; and a wedge biasing member (e.g., spring 39d in the embodiment) which provides, with the rollers being held by the roller holding member and held between the plurality of pairs of wedge grooves in the base member and the slide member, a pressing force in a direction in which the rollers are held between the wedge grooves.

It is preferable that the second movement conversion mechanism includes: a cam member or a pinion teeth member in the form of an involute which is provided continuously with an output rotation shaft of the electric motor unit; and rack teeth (e.g., rack-side abutment surfaces 37d in the embodiment) formed in the slide member to be engaged with the cam member or pinion teeth member. The disk brake device is preferably configured to cause the electric motor unit to rotate the cam member or pinion teeth member and thus move the slide member to slide via the rack teeth as described above.

In the disk brake device described above, it is also preferable that the base member is attached to the caliper via an adjustment mechanism (e.g., adjustor main body portions 32, adjustor tubular bodies 33, and adjusting drive gear 38) to be movable in a direction orthogonal to the braking surface, and an increase in a gap which is formed between the braking surface and the frictional pad in accordance with abrasion of the frictional pad is adjustable by moving the base member in a direction which brings the base member closer to the braking surface by means of the adjustment mechanism.

### ADVANTAGEOUS EFFECTS OF THE INVENTION

The disk brake device according to the present invention is configured to include the first movement conversion mechanism which moves the slide member in the direction perpendicular to the braking surface, while moving the slide member to slide relative to the base member in the rotating direction of the rotor, the electric motor unit, and the second movement conversion mechanism which moves, using the rotational driving force of the electric motor unit, the slide member to slide in the rotating direction of the rotor. As a result, by converting the rotational driving force of the electric motor unit to the slide movement of the slide member by means of the second movement conversion mechanism and then further converting the slide movement of the slide member to the movement for pressing the frictional pad against the braking surface by means of the first movement conversion mechanism, it is possible to cause the braking force amplified by the second movement conversion mechanism and the first movement conversion mechanism to act on the braking surface. Therefore, it is possible to implement a compact disk brake device capable of generating a sufficient braking force, while having a configuration in which the frictional pad is pressed against the rotor using the rotational driving force of the electric motor.

In the disk brake device described above, it is preferable that the motor drive control unit controls the rotational driving of the electric motor unit such that the detected real braking force has a value corresponding to the required braking force value. When the disk brake device is thus configured, by controlling the rotational driving of the electric motor unit, it is possible to cause the intended braking force to precisely act.

In the disk brake device described above, it is preferable that the motor drive control unit controls the direction of the rotational driving of the electric motor unit such that the frictional pad is pressed against the braking surface, while being moved to slide in the rotating direction of the rotor by the first movement conversion mechanism. When the frictional pad is thus configured to be pressed against the braking surface, while being moved to slide in the rotating direction of the rotor, the frictional pad is moved to slide by a frictional force between the rotor and the frictional pad, and the pressing force is automatically amplified by the slide movement. Therefore, by permitting the frictional pad to be moved by the frictional force to slide, it is possible to allow the pressing force to be automatically amplified and generate a large braking force.

In the disk brake device described above, it is preferable that the first movement conversion mechanism is configured to include the V-shaped wedge grooves formed in the base member and in the slide member, the rollers disposed in and held between the wedge grooves, and the wedge biasing member which provides, with the rollers being held between the wedge grooves, the pressing force in the direction in which the rollers are held between the wedge grooves. In the case of this configuration, despite the simple configuration in which the rollers are merely fitted in the wedge grooves to be held therebetween, it is possible to allow the pressing force to be automatically amplified.

In the disk brake device described above, it is preferable that the second movement conversion mechanism is configured to include the cam member or the pinion teeth member which is provided on the output rotation shaft of the electric motor unit, and the rack teeth formed in the slide member to be engaged with the cam member or the pinion teeth member. In this configuration, by forming the cam member or the pinion teeth member in an involute shape, it is possible to reduce slip between the cam member or the pinion teeth member and the rack teeth and efficiently (with a reduced transmission loss) convert the rotational output of the electric motor unit to the slide movement of the slide member.

In the disk brake device described above, it is preferable that the base member is configured to be attached via the adjustment mechanism to be movable in the direction orthogonal to the braking surface. In the case of thus configuring the base member, even when the frictional pad is abraded to result in an increase in the gap between the braking surface and the frictional pad, it is possible to adjust the gap using the adjustment mechanism to provide a narrower gap. Therefore, it is possible to maintain the gap between the braking surface and the frictional pad at a given distance.

### BRIEF DESCRIPTION OF THE DRAWINGS

FIG. 1 is a perspective view of a disk brake device to which the present invention is applied;
FIG. 2 is a cross-sectional view of a II-II portion in FIG. 1;
FIG. 3 is a perspective view showing a pad and a wedge plate portion (in which a cage and a biasing unit are omitted);
FIG. 4 is a perspective view showing the pad and the wedge plate portion (including the cage and the biasing unit);
FIG. 5 is a perspective view showing the pad and the wedge plate portion (including a base plate);
FIG. 6 is a plan view showing the wedge plate portion;
FIG. 7 is an illustrative view obtained by adding a control configuration to a view in which an inner unit portion is enlarged;
FIG. 8 is an illustrative view for illustrating the operation of the wedge plate; and
FIG. 9 is a flow chart related to control of an electric motor.

### DESCRIPTION OF THE EMBODIMENTS

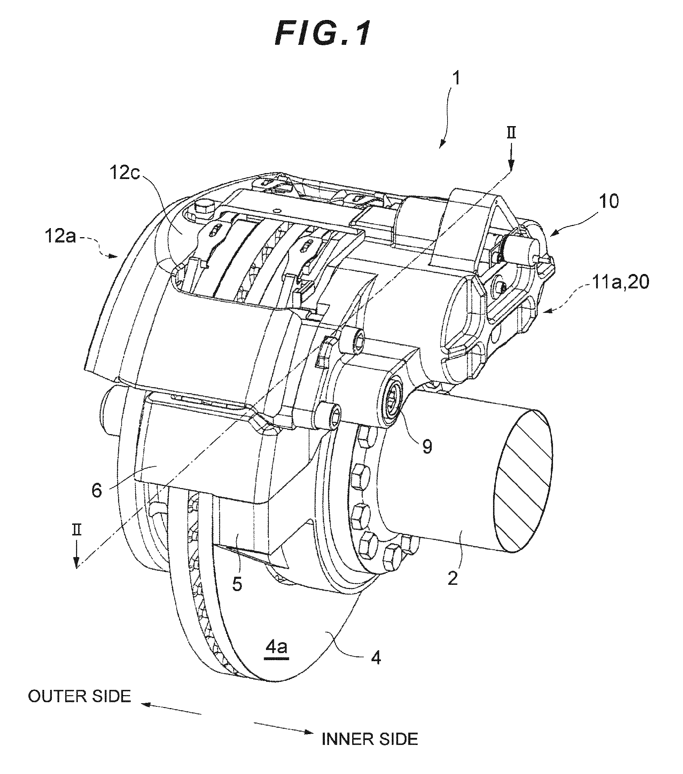

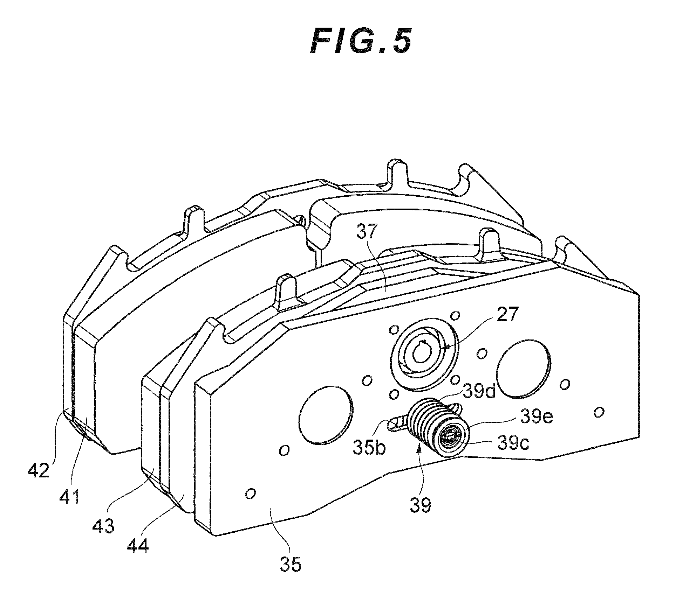

Referring to the drawings, a description will be given below of an embodiment for carrying out the present invention. FIG. 1 shows a perspective view of a disk brake device 1 as an example to which the present invention is applied. First, a description will be given of an overall configuration of the disk brake device 1 with reference to FIGS. 1 to 7. Note that, in the description given below, the laterally outer side of a vehicle is referred to as an outer side and the laterally inner side of the vehicle is conversely referred to as an inner side.

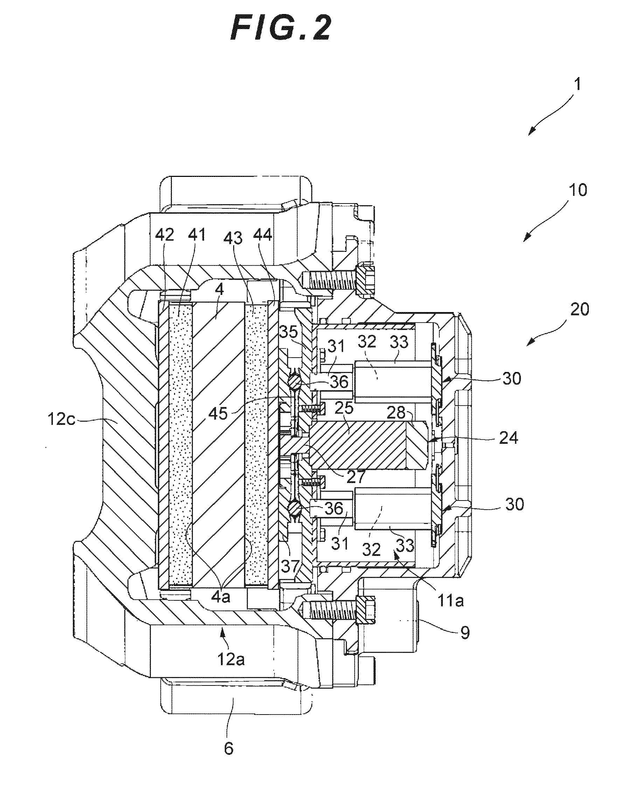

In the disk brake device 1, as shown in FIGS. 1 and 2, a caliper assembly 10 configured by containing an inner unit 20 in an inner-side inner space 11a and containing an inner pad 43 and an outer pad 41 in an outer-side opening 12a is disposed so as to hold the end portion of a rotor 4 formed in a disk shape on both sides thereof. The caliper assembly 10 is attached to a carrier 6 to be movable by a plurality of slide pins 9 to slide in the axial direction of the rotor 4. The carrier 6 is attached and secured to a support plate 5 secured to an axle shaft 2.

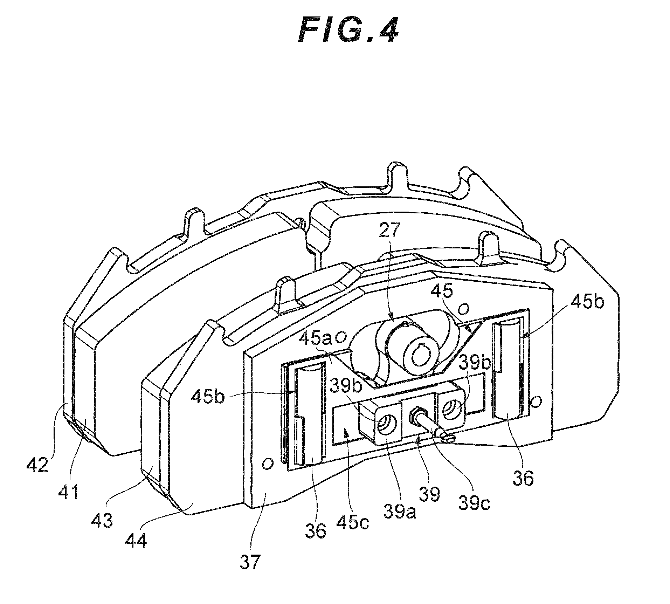

As shown in FIG. 2, the inner unit 20 includes an electric motor unit 24, two adjustment units 30 provided on both sides of the electric motor unit 24, a base plate 35 provided on the outer side of the electric motor unit 24, a wedge plate 37 disposed to face the base plate 35, cylindrical rollers 36 held between the base plate 35 and the wedge plate 37, a cage 45 which holds the rollers 36, and a biasing unit 39 (see FIGS. 4 to 6) which biases the wedge plate 37 toward the base plate 35.

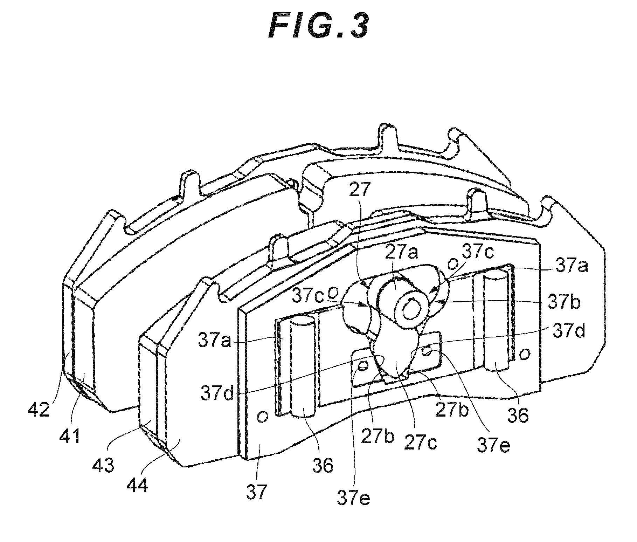

The electric motor unit 24 includes an electric motor 25 which receives a power supply and outputs a rotational driving force, a cam member 27 attached to the output shaft of the electric motor 25, and a rotation angle sensor 28 for detecting the rotation angle of the electric motor 25. As shown in FIG. 3, the cam member 27 is configured to include a main body portion 27a attached to the output shaft of the electric motor 25, and engaging teeth 27c formed continuously with the main body portion 27a and having cam-side abutment surfaces 27b each in the form of, e.g., an involute formed on the both side surfaces thereof. Note that the electric motor unit 24 is attached to the base plate 35 in a position in which the drive shaft of the electric motor 25 is orthogonal to a braking surface 4a.

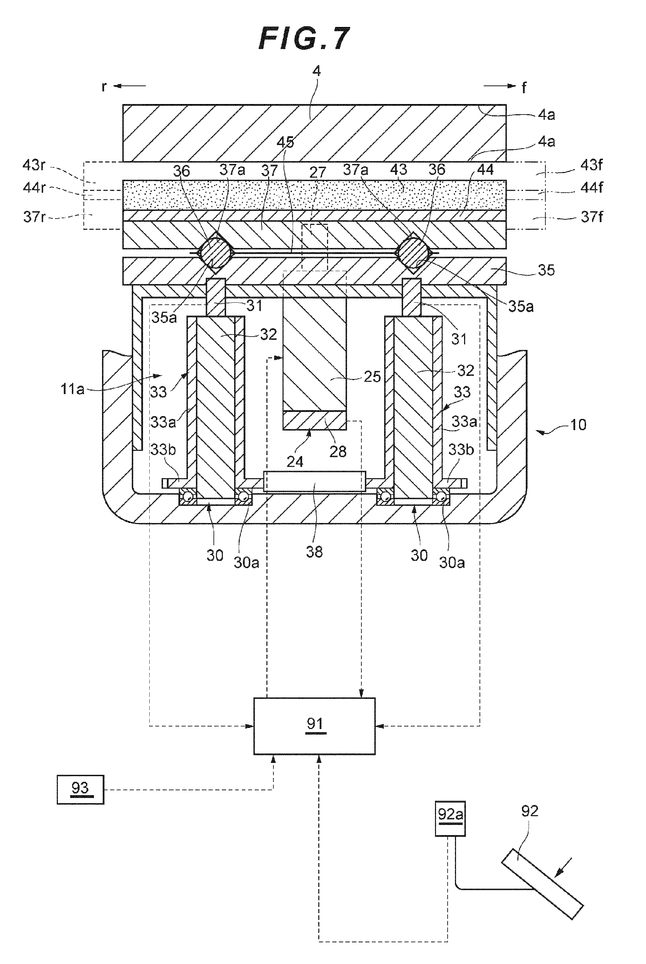

As shown in FIGS. 2 and 7, each of the adjustment units 30 includes a sensor 31, an adjustor main body portion 32, an adjustor tubular body 33, and an adjusting drive gear 38. As shown in FIG. 7, the sensor 31 is capable of detecting a pressing force when the inner pad 43 is pressed against the braking surface 4a. The adjustor tubular body 33 includes a tubular portion 33a formed in a tubular shape and having a helical tube-side screw (not shown) formed in the inner circumferential surface thereof, and an adjusting follower gear 33b formed at the inner-side end portion of the tubular portion 33a. The outer circumferential surface of the adjustor main body portion 32 is formed with a helical main-body-side screw (not shown) to be engaged with the tube-side screw formed in the tubular portion 33a. The tube-side screw and the main-body-side screw are engaged with each other to attach the adjustor tubular body 33 to the adjustor main body portion 32. The adjusting drive gear 38 is engaged with the adjusting follower gear 33b of each of the adjustment units 30. By the adjustment units 30 thus configured, the gap between the braking surface 4a of the rotor 4 and the inner pad 43 is adjusted to have a predetermined distance every time a braking operation is performed.

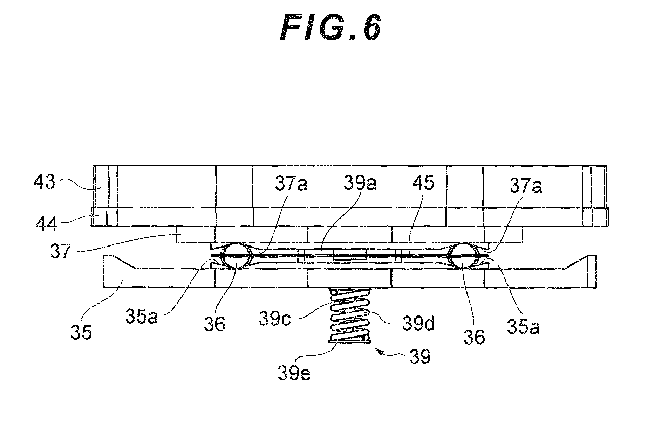

As shown in FIG. 6, in the surface of the base plate 35 facing the wedge plate 37, two wedge grooves 35a each having a V-shaped cross-sectional shape for holding the rollers 36 fitted therein are formed. As shown in FIGS. 4 and 6, the wedge plate 37 is formed in a generally flat plate shape. In the surface thereof facing the base plate 35, two wedge grooves 37a each having a V-shaped cross-sectional shape for holding the rollers 36 fitted therein are formed at positions corresponding to the wedge grooves 35a of the base plate 35.

As shown in FIG. 3, in the middle portion of the wedge plate 37, an insertion space 37b through which the cam member 27 is inserted is formed to extend therethrough in a direction orthogonal to the braking surface 4a. The portions of the upper part of the insertion space 37b which are located laterally to the main body portion 27a are formed with recess portions 37c for preventing interface between the wedge plate 37 and the main body portion 27a when the wedge plate 37 is moved to slide in a lateral direction. On the other hand, the lower part of the insertion space 37b is formed with rack-side abutment surfaces 37d which come into abutment with the cam-side abutment surfaces 27b of the cam member 27. Accordingly, when the electric motor 25 is driven to rotate to rotate the cam member 27, the wedge plate 37 is pressed in the rotating direction of the cam member 27 to be moved to slide in the rotating direction of the cam member 27, while facing the base plate 35. Note that a pair of screw holes 37e are formed laterally to the rack-side abutment surfaces 37d.

As shown in FIG. 4, the cage 45 is configured such that a pair of roller holding portions 45b for holding the rollers 36 contained therein are formed in a base portion 45a formed in a generally flat plate shape and a positioning opening 45c is formed in the middle portion thereof. The rollers 36 are contained in the roller holding portions 45b to be rotatably supported in a state where the vertical movement thereof, the movement thereof in the rotating direction of the rotor 4, and the movement thereof in the direction orthogonal to the braking surface 4a are restricted. The positioning opening 45c is formed to be opened in correspondence to a base member 39a described later. The base member 39a is fitted in the positioning opening 45c to be slid in a front-rear direction, while being guided thereby.

As shown in FIGS. 4 to 6, the biasing unit 39 includes the base member 39a attached to the wedge plate 37, a support shaft 39c attached to the base member 39a, a spring 39d, and a spring retainer 39e. The base member 39a is formed with a pair of screw insertion holes 39b. By driving fastening screws (not shown) inserted in the screw insertion holes 39b into the screw holes 37e of the wedge plate 37, the base member 39a is attached to the wedge plate 37. The spring 39d into which the support shaft 39c has been inserted is fixed in a compressed state by the spring retainer 39e. The spring 39d is configured such as the biasing force thereof toward the inner side constantly acts on the wedge plate 37. By the biasing unit 39, the rollers 36 are held, while being held by and between the wedge plate 37 (wedge grooves 37a) biased toward the inner side and the base plate 35 (wedge grooves 35a).

The outer pad 41 (referred to also as a frictional member) has a shoe plate 42 secured to the outer side thereof. The inner pad 43 (referred to also as the frictional member) has a shoe plate 44 secured to the inner side thereof. Note that the outer pad 41 to which the shoe plate 42 has been secured (or the inner pad 43 to which the shoe plate 44 has been secured) may also be referred to simply as the pad.

The outer pad 41 and the inner pad 43 each are pressed against the braking surface 4a to generate a frictional force in accordance with the pressing force and exert, on the rotor 4 (braking surface 4a), a braking force which stops the rotation of the rotor 4. The outer pad 41 is integrated with the shoe plate 42 and inserted between a bridge portion 12c formed in the outer portion of the caliper assembly 10 and the rotor 4. On the other hand, the inner pad 43 is integrated with the shoe plate 44 and inserted between the wedge plate 37 and the rotor 4.

As shown in FIG. 7, the vehicle is provided with a controller 91 which controls the operation of the electric motor 25. To the controller 91, the pressing force when the inner pad 43 is pressed against the braking surface 4a which has been detected by the sensor 31 and the rotation angle of the electric motor 25 which has been detected by the rotation angle sensor 28 are input. The vehicle is also provided with a brake pedal 92 for a driver to perform a braking operation. The brake pedal 92 is provided with a stepping force detection sensor 92a which converts the stepping force (braking operation force) applied to the brake pedal 92 to a signal and detects the signal. The electric signal detected by the stepping force detection sensor 92a is output to the controller 91. Note that, in the controller 91, the braking operation force detected by the stepping force detection sensor 92a and the pressing force of the inner pad 43 corresponding to the braking operation force are preliminarily associated with each other and stored.

The vehicle is also provided with a rotating direction detection sensor 93 for detecting the rotating direction (forward direction f or rearward direction r) of the rotor 4. The detection result obtained in the rotating direction detection sensor 93 is output to the controller 91.

However, as will be described later, when the outer pad 41 and the inner pad 43 are repeatedly pressed against the braking surface 4a of the rotor 4 and abraded, the gap between each of the outer pad 41 and the inner pad 43 and the braking surface 4a increases accordingly due to the abrasion. As a result, a time lag between the time when the driver steps on the brake pedal 92 and the time when the outer pad 41 and the inner pad 43 are actually pressed against the braking surface 4a increases to degrade the responsiveness of the braking operation. To prevent this, the disk brake device 1 is configured such that, when the gap increases due to the abrasion of the outer pad 41 and the inner pad 43, the adjusting drive gear 38 is automatically driven to rotate to adjust and reduce the gap between each of the outer pad 41 and the inner pad 43 and the braking surface 4a to a predetermined distance to be able to ensure the responsiveness of the braking operation.

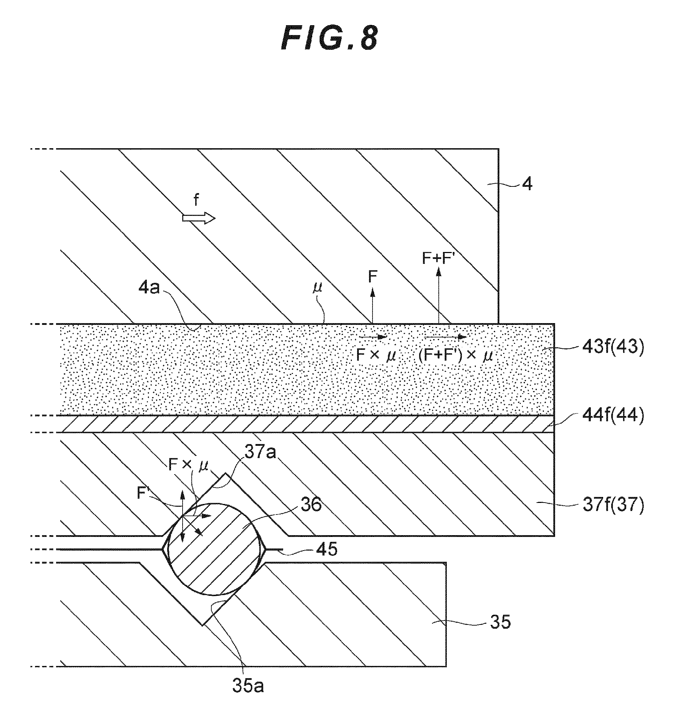

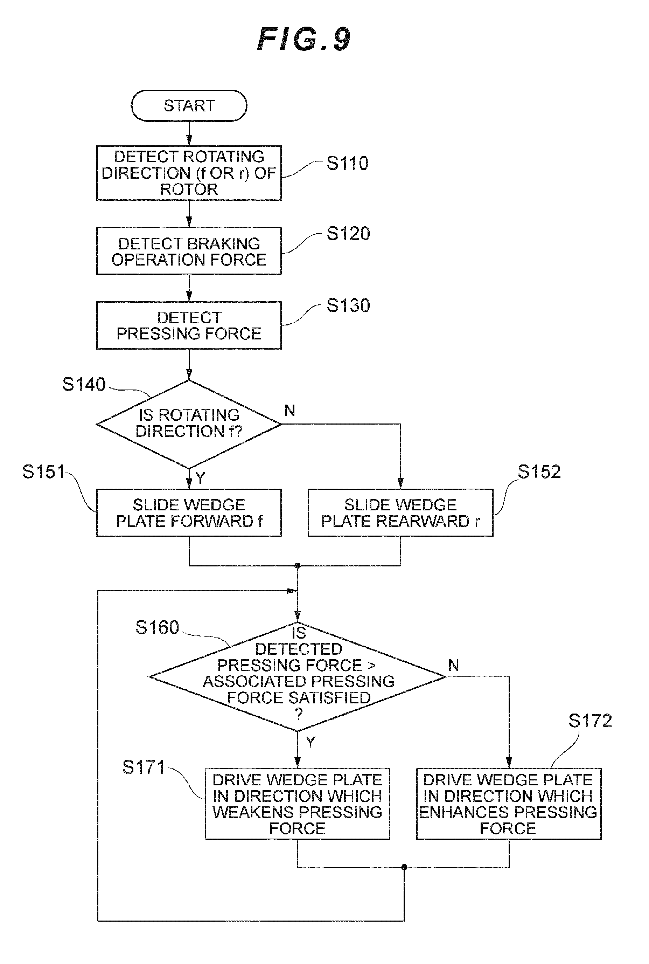

Thus far, the description has been given of the overall configuration of the disk brake device 1. In the following, referring to FIGS. 7 and 8, a description will be given of the operation of the disk brake device 1 thus configured along the flow chart shown in FIG. 9. Note that, in the following, by way of example, the description will be given of the operation of the disk brake device 1 when, in a state where a stepping operation has not been performed on the brake pedal 92 while the vehicle is forwardly running or backwardly running, the stepping operation is performed by the driver on the brake pedal 92.

First, in Step S110 shown in FIG. 9, the rotating direction (forward direction f or backward direction r) of the rotor 4 detected by the rotating direction detection sensor 93 is input to the controller 91. Next, the flow advances to Step S120 where a signal indicating the braking operation force applied to the brake pedal 92 detected by the stepping force detection sensor 92a is input to the controller 91. Subsequently, the flow advances to Step S130 where a signal indicating the pressing force of the inner pad 43 applied to the braking surface 4a detected by the sensor 31 is input to the controller 91.

In Step S140 subsequent thereto, the controller 91 determines whether or not the rotating direction of the rotor 4 input in Step S 110 is the forward direction f. When the rotating direction of the rotor 4 is the forward direction f as a result of the determination, the controller 91 outputs a drive signal to the electric motor 25 so as to move the wedge plate 37 to slide in the forward direction f (Step S151).

The input drive signal drives the electric motor 25 to rotate, thereby reducing the rotational driving force of the electric motor 25. The reduced rotational driving force is transmitted to the cam member 27 to drive the cam member 27 to rotate. As a result, the cam-side abutment surfaces 27b of the cam member 27 press the rack-side abutment surfaces 37d of the wedge plate 37 to move the wedge plate 37 to slide in the rotating direction (which is the forward direction f in this case) of the cam member 27. Note that the rotation angle of the electric motor 25 has been detected by the rotation angle sensor 28 provided adjacent to the electric motor 25 and input to the controller 91.

By thus using the configuration which causes the cam-side abutment surfaces 27b each formed in the involute shape to abut on the rack-side abutment surfaces 37d and move the wedge plate 37 to slide, when the cam member 27 is driven to rotate, it is possible to inhibit slip occurring between the cam-side abutment surfaces 27b and the rack-side abutment surfaces 37d and efficiently convert the rotational driving force of the cam member 27 to the slide movement of the wedge plate 37.

FIG. 7 shows a state where the wedge plate 37 has thus been moved to slide in the forward direction f and the shoe plate 44 and the inner pad 43 have been integrally moved to slide in the forward direction f, in which the wedge plate 37, the shoe plate 44, and the inner pad 43 are shown by the two-dot-dash lines as a wedge plate 37f, a shoe plate 44f, and an inner pad 43f.

FIG. 8 shows an enlarged view of the wedge plate 37f, the shoe plate 44f, and the inner pad 43f which have been moved to slide in the forward direction f. As can be seen from FIG. 8, when the wedge plate 37 is moved to slide in the forward direction f, each of the rollers 36 is pressed against the inclined surface of the V-shaped wedge groove 37a corresponding to the rearward direction so that the wedge plate 37 (the shoe plate 44 and the inner pad 43 each integrated with the wedge plate 37) is pushed out relatively to each of the rollers 36 toward the outer side (toward the braking surface 4a) in such a manner as to follow the inclination of the inclined surface.

On the other hand, when the rotating direction of the rotor 4 is the rearward direction r as a result of the determination in Step S 140, a drive signal is output from the controller 91 to the electric motor 25 so as to move the wedge plate 37 to slide in the rearward direction r (Step S152). As a result, the cam-side abutment surfaces 27b of the cam member 27 press the rack-side abutment surfaces 37d of the wedge plate 37 so that the wedge plate 37 is moved to slide in the rotating direction (which is the rearward direction r in this case) of the cam member 27. In FIG. 7, the positions of the wedge plate 37, the shoe plate 44, and the inner pad 43 when the wedge plate 37 has been moved to slide in the rearward direction r are shown by the dotted lines as a wedge plate 37r, a shoe plate 44r, and an inner pad 43r.

When the wedge plate 37 is moved in a direction which brings the wedge plate 37 closer to the braking surface 4a, while being thus simultaneously moved to slide in the forward direction f or in the rearward direction r in accordance with the rotation angle of the cam member 27, the inner pad 43 is pressed against the braking surface 4a at a given point of time. As a result, a counterforce exerted from the braking surface 4a on the inner pad 43 acts on the caliper assembly 10 via the shoe plate 44, the wedge plate 37, the rollers 36, the base plate 35, and the adjustment units 30 to press the caliper assembly 10 toward the inner side.

When the caliper assembly 10 is pressed toward the inner side, the caliper assembly 10 is moved by the slide pins 9 to slide toward the inner side relative to the carrier 6. As a result, the shoe plate 42 and the outer pad 41 are integrally pressed by the bridge portion 12c formed on the outer side toward the inner side so that the outer pad 41 is pressed against the braking surface 4a. The disk brake device 1 is configured such that, by thus pressing each of the outer pad 41 and the inner pad 43 against the braking surface 4a and holding the rotor 4 therebetween, a braking force which stops the rotation of the rotor 4 is allowed to act.

The disk brake device 1 is configured such that, at this time, by the base plate 35, the rollers 36, and the wedge plate 37, the pressing force pressing the inner pad 43 against the braking surface 4a is automatically amplified (self-boosting is effected). The configuration will be described with reference to FIG. 8. Note that, in the following, the description will be given on the assumption that a friction coefficient between the braking surface 4a and the inner pad 43 is µ.

As shown in FIG. 8, when the inner pad 43 is pressed against the braking surface 4a with the pressing force F, a frictional force of F × µ acts in the forward direction f on the inner pad 43. At this time, the frictional force of F × µ also acts on the wedge plate 37 integrated with the inner pad 43, while acting on the abutment portions between the wedge grooves 37a formed in the wedge plate 37 and the rollers 36. In the abutment portions, the counterforce of a component of the frictional force of F × µ in the direction orthogonal to the braking surface 4a acts on the wedge plate 37 as a counterforce F' acting in the direction which brings the wedge plate 37 closer to the braking surface 4a. Consequently, the inner pad 43 is pressed against the braking surface 4a with a pressing force obtained by adding the counterforce F' to the original pressing force F so that a frictional force (F + F') × µ corresponding to the totaled pressing force (F + F') acts on the inner pad 43.

When the frictional force acting in the forward direction f on the inner pad 43 is amplified from F × µ to (F + F') × µ, the inner pad 43, the shoe plate 44, and the wedge plate 37 are resultantly moved to slide in the forward direction f. As a result, the wedge plate 37 receives a larger counterforce from each of the rollers 36 so that the inner pad 43 is thereby pressed against the braking surface 4a with a larger pressing force. The disk brake device 1 is configured such that the operation in which the inner pad 43 is thus moved to slide in the forward direction f by the frictional force and the operation in which the inner pad 43 is thus pressed against the braking surface 4a with a larger pressing force are repeated to cause the pressing force of the inner pad 43 applied to the braking surface 4a to be automatically amplified.

By thus using the configuration (wedge mechanism) which effects self-boosting using the base plate 35, the rollers 36, and the wedge plate 37, even when the relatively small-sized electric motor 25 is used, it is possible to press the outer pad 41 and the inner pad 43 against the braking surface 4a with a sufficiently large pressing force and cause a sufficient braking force to act on the rotor 4. This allows the disk brake device 1 to be configured using the relatively small-sized electric motor 25 and allows the disk brake device 1 to be compactly configured to be able to ensure a sufficient placement space for the other components placed around the wheel.

To effect self-boosting in the disk brake device 1, in Step S151 or S152, the electric motor 25 is driven to rotate so as to move the wedge plate 37 to slide in the rotating direction of the rotor 4.

Subsequently, the flow advances to Step S160 where it is determined in the controller 91 whether or not the pressing force of the inner pad 43 detected in the sensor 31 when the braking force thus acts on the rotor 4 is larger than the pressing force corresponding to the braking operation force detected in the stepping force detection sensor 92a.

In Step S160, when it is determined that the detected pressing force is larger than the pressing force corresponding to the detected braking operation force, the flow advances to Step S 171 where a drive signal is output from the controller 91 to the electric motor 25 so as to move the wedge plate 37 in a direction which weakens the pressing force (move the wedge plate 37 toward the inner side).

On the other hand, when it is determined that the detected pressing force is smaller than the pressing force associated with the detected braking operation force, the flow advances to Step S 172 where a drive signal is output from the controller 91 to the electric motor 25 so as to move the wedge plate 37 in a direction which enhances the pressing force (move the wedge plate 37 toward the outer side).

By thus feeding back the pressing force to repeatedly perform Steps S160, S171, and S 172, the rotational driving of the electric motor 25 is controlled so as to press the inner pad 43 against the braking surface 4a with the pressing force corresponding to the braking operation force applied to the brake pedal 92. By doing so, it is possible to cause the braking force intended by the driver to act on the rotor 4 and decelerate the vehicle.

In the embodiment described above, the description has been given of the example of the configuration in which the two rollers 36 are held between the two pairs of wedge grooves 35a and 37c, but the application of the present invention is not limited to the example of the configuration. Any configuration may be used as long as the wedge plate 37 is moved to slide, while facing the base plate 35. For example, it is possible to set the number of the pairs of the wedge grooves 35a and 37c in accordance with the size of the wedge plate 37 or the like.

In the embodiment described above, the description has been given of the example of the configuration in which the pressing force of the inner pad 43 is detected using the sensor 31 and fed back to control the rotational driving of the electric motor 25. However, the application of the present invention is not limited to the example of the configuration. For example, the configuration may also be such that, instead of detecting the pressing force of the inner pad 43, a brake torque generated by pressing the inner pad 43 against the braking surface 4a is detected and fed back or the deceleration of the vehicle is detected and fed back to control the rotational driving of the electric motor 25.

In the embodiment described above, the cam member 27 having the single set of engaging teeth 27c and the wedge plate 37 formed with the insertion space 37b including the single rack which is engaged with the single set of engaging teeth 27c have been described by way of example. However, the present invention is not limited to this configuration. For example, a configuration using a cam member having a plurality of sets of engaging teeth and a wedge plate formed with a cam insertion space including a plurality of racks which are simultaneously engaged with the plurality of sets of engaging teeth may also be used. Also, the cam member 27 including the main body portion 27a and the engaging teeth 27c has been described by way of example, but it may also be possible to use a pinion teeth member formed to include pinion teeth which transmit the rotational driving force of the electric motor 25 instead of the cam member 27 having this configuration.

In the embodiment described above, the description has been given of the example of the configuration in which the adjusting drive gear 38 is automatically driven to rotate in accordance with the gap between each of the outer pad 41 and the inner pad 43 and the braking surface 4a to adjust the gap. However, the present invention is not limited to the example of the configuration. Instead of this configuration, a configuration may also be used in which, e.g., an adjusting electric motor which drives the adjusting drive gear to rotate is separately provided and the rotational driving of the adjusting electric motor is controlled to automatically adjust the gap between the pad and the braking surface.

### EXPLANATION OF NUMERALS AND CHARACTERS

- 1: Disk Brake Device
- 4: Rotor
- 4a: Braking Surface
- 10: Caliper Assembly (Caliper)
- 24: Electric Motor Unit
- 27: Cam Member, Pinion Teeth Member
- 31: Sensor (Braking Force Detection Means)
- 32: Adjustor Main Body Portion (Adjustment Mechanism)
- 33: Adjustor Tubular Body (Adjustment Mechanism)
- 35: Base Plate (Base Member)
- 35a: Wedge Groove
- 36: Roller
- 37: Wedge Plate (Slide Member)
- 37a: Wedge Groove
- 37d: Rack-Side Abutment Surface (Rack Teeth)
- 38: Adjusting Drive Gear (Adjustment Mechanism)
- 39d: Spring (Wedge Biasing Member)
- 41: Outer Pad (Frictional Pad)
- 43: Inner Pad (Frictional Pad)
- 45: Cage (Roller Holding Member)
- 91: Controller (Motor Drive Control Unit)
- 92: Brake Pedal (Braking Operation Means)
- 92a: Stepping Force Detection Sensor (Required Braking Force Value Detection Means)
- 93: Rotating Direction Detection Sensor (Rotating Direction Detection Means)

## Claims

1. A disk brake device, comprising:
a rotor having a disk-shaped braking surface and coupled to a rotating body to be braked to rotate;
a caliper disposed to be fixed relative to the rotor in a rotating direction thereof;
a frictional pad disposed to face the braking surface of the rotor; and
a braking operation mechanism attached to the caliper to be caused to perform an operation of pressing the frictional pad against the braking surface,
the braking operation mechanism including a base member attached to the caliper, a slide member disposed to face the base member and holding the frictional pad, a first movement conversion mechanism provided between the base member and the slide member to move the slide member in a direction perpendicular to the braking surface, while moving the slide member to slide relative to the base member in the rotating direction of the rotor in parallel to the braking surface, an electric motor unit attached to the base member to receive electric power and output a rotational driving force, and a second movement conversion mechanism which moves, using the rotational driving force of the electric motor unit, the slide member to slide in the rotating direction of the rotor in parallel to the braking surface, and
the disk brake device being configured to move, using the rotational driving force of the electric motor unit, the slide member to slide by means of the second movement conversion mechanism and thus move the slide member and the frictional pad held thereby in the direction perpendicular to the braking surface by means of the first movement conversion mechanism to thereby press the frictional pad against the braking surface and brake the rotation of the rotor.

2. The disk brake device according to claim 1, further comprising:
braking operation means which is caused to perform a braking operation;
required braking force value detection means for detecting a required braking force value presented by the braking operation performed by the braking operation means;
braking force detection means for detecting a braking force generated by pressing the frictional pad against the braking surface; and
a motor drive control unit which controls rotational driving of the electric motor unit, wherein
the motor drive control unit controls the rotational driving of the electric motor unit such that the braking force detected by the braking force detection means has a value corresponding to the required braking force value detected by the required braking force value detection means.

3. The disk brake device according to claim 2, further comprising:
rotating direction detection means for detecting the rotating direction of the rotor, wherein
the motor drive control unit controls a direction of the rotational driving of the electric motor unit such that the frictional pad is pressed against the braking surface, while being moved to slide in the rotating direction of the rotor by the first movement conversion mechanism.

4. The disk brake device according to any one of claims 1 to 3, wherein the first movement conversion mechanism includes:
a plurality of pairs of V-shaped wedge grooves formed in respective surfaces of the base member and the slide member which extend in parallel to the braking surface and face each other, the wedge grooves extending in directions each at right angles to the rotating direction of the rotor and facing each other;
a plurality of rollers disposed in and held between the plurality of pairs of wedge grooves in the base member and the slide member that face each other;
a roller holding member which restricts movement of the plurality of rollers in axial directions thereof and movement of the plurality of rollers relative to each other; and
a wedge biasing member which provides, with the rollers being held by the roller holding member and held between the plurality of pairs of wedge grooves in the base member and the slide member, a pressing force in a direction in which the rollers are held between the wedge grooves.

5. The disk brake device according to any one of claims 1 to 4, wherein the second movement conversion mechanism includes:
a cam member or a pinion teeth member in the form of an involute which is provided continuously with an output rotation shaft of the electric motor unit; and
rack teeth formed in the slide member to be engaged with the cam member or the pinion teeth member,
the disk brake device being configured to cause the electric motor unit to rotate the cam member or the pinion teeth member and thus move the slide member to slide via the rack teeth.

6. The disk brake device according to any one of claims 1 to 5, wherein
the base member is attached to the caliper via an adjustment mechanism to be movable in a direction orthogonal to the braking surface, and
an increase in a gap which is formed between the braking surface and the frictional pad in accordance with abrasion of the frictional pad is adjustable by moving the base member in a direction which brings the base member closer to the braking surface by means of the adjustment mechanism.
